**Europäisches Patentamt**

**European Patent Office**

**Office européen des brevets**

(11) Veröffentlichungsnummer: **0 348 834**
**A1**

(12) **EUROPÄISCHE PATENTANMELDUNG**

(21) Anmeldenummer: **89111445.6**

(22) Anmeldetag: **23.06.89**

(51) Int. Cl.⁴: **F16C 1/10**

(30) Priorität: **30.06.88 DE 8808368 U**

(43) Veröffentlichungstag der Anmeldung:
**03.01.90 Patentblatt 90/01**

(84) Benannte Vertragsstaaten:
**DE ES FR GB IT NL SE**

(71) Anmelder: **KÜSTER & Co. GmbH**
**Postfach 1157**
**D-6332 Ehringshausen(DE)**

(72) Erfinder: **Jakob, Willi**
**Berliner Strasse 4**
**D-6332 Ehringshausen(DE)**

(54) **Unterteiltes Führungsrohr für einen Seilzug.**

(57) Es wird ein unterteiltes Führungsrohr z.B. für einen Seilzug (4) beschrieben, das aus mindestens zwei Einzelrohren (1,2) besteht, von denen das zweite (2) an einem Ende sacklochartig aufgeweitet ist und das erste (1) mit seinem einen Ende in diese Aufweitung (2a) eingesteckt ist. Zur Vermeidung von Klappergeräuschen ist das eingesteckte Ende des zweiten Rohres (2) mit einem Gummipuffer (8) umkleidet, der auch die Stirnfläche des eingesteckten ersten Rohres (1) umkleidet. Es werden daher nicht nur Klappergeräusche vermieden, die durch radiale Bewegung des zweiten, eingesteckten Rohres innerhalb des ersten Rohres entstehen könnten sondern auch solche Geräusche, die durch axiale Bewegung des eingesteckten Rohres (1) innerhalb des sacklochartigen Endes des zweiten Rohres (2) hervorgerufen werden könnten.

## Unterteiltes Führungsrohr für einen Seilzug

Die Erfindung betrifft ein unterteiltes Führungsrohr für einen Seilzug bzw. für einen Schlauch in dem ein Seil geführt wird. Das Führungsrohr ist dabei derart aufgebaut, daß an den Verbindungsstellen der einzelnen Rohre das Ende eines ersten Einzelrohres in das sacklochartig aufgeweitete Ende eines zweiten Einzelrohres gesteckt ist.

Derartige Führungsrohre sind bekannt, und es ist ebenfalls bekannt, das Klappern das ersten Einzelrohres in dem Muffenende des zweiten Einzelrohres dadurch zu vermeiden, daß das Ende des ersten Rohres in einem O-Ring oder dgl. gehalten wird.

Diese Lagerung vermeidet aber nur Klappergeräusche, die durch eine Bewegung der Rohre senkrecht zur Rohrachse hervorgerufen werden. Werden die Einzelrohre jedoch in Achsrichtung zusammengedrückt, so wird durch das Auftreffen der Stirnfläche des den ersten Einzelrohres auf den Grund der sacklochartigen Aufweitung des zweiten Einzelrohres nach wie vor ein Klappergeräsuch hervorgerufen.

Der Erfindung liegt die Aufgabe zugrunde, eine Lagerung des Endes des ersten Einzelrohres in dem Muffenende des zweiten Einzelrohres anzugeben, durch die alle Klappergeräusche, also auch diejenigen, die durch eine Achsialverschiebung der Rohr zueinander hervorgerufen werden, vermieden werden.

Diese Aufgabe ist durch ein Führungsrohr gelöst, das die im Anspruch angegebenen Merkmale aufweist.

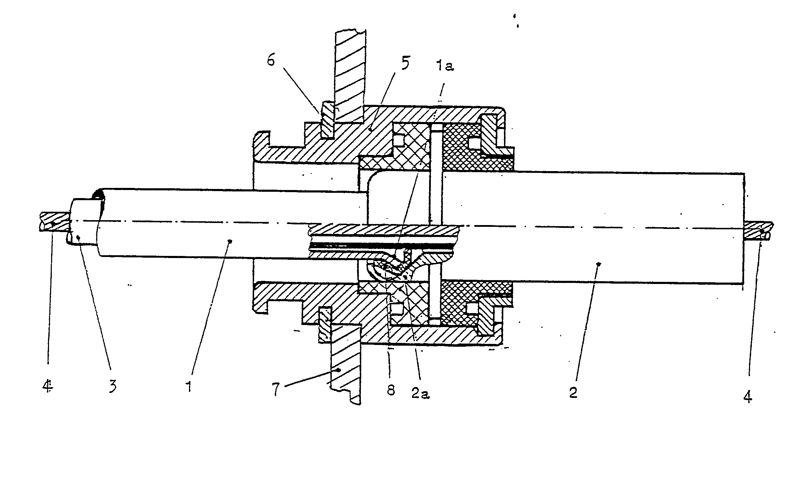

In der Zeichnung ist die Erfindung in einem Ausführungsbeispiel dargestellt. Mit 1 ist ein erstes Einzelrohr bezeichnet und mit 2 ein zweites Einzelrohr. Letzteres besitzt an seinem Ende eine sacklochartige Aufweitung 2a, in die das erste Einzelrohr mit seinem konusartig aufgeweiten Ende gesteckt ist.

In den Einzelrohren 1 und 2 ist ein Schlauch 3 geführt, in dem ein Seilzug 4 längsverschiebbar ist. Der Schlauch 3 stellt somit eine Auskleidung der Rohre dar.

Die Verbindungsstelle der Rohre 1 und 2 wird in einem Haltefitting 5 gehalten, das seinerseits mittels eines Sicherungsringes 6 in einer ortsfesten Wand 7 gelagert ist.

Das Ende des ersten Einzelrohres 1 ist mit einem Gummipuffer 8 umkleidet, und zwar derart, daß auch die Stirnfläche des Rohres von dem Gummipuffer umgriffen wird. Durch dieses vollständige Umgreifen des Rohrendes durch den Gummipuffer werden sämtliche Klappergeräusche unterbunden, die durch eine Relativbewegung der Rohrenden hervorgerufen werden könnten.

Die konstruktive Ausgestaltung der Gummipuffer 8 ist an sich beliebig. Es ist lediglich erforderlich, daß die Umkleidung des Rohrendes sowohl in radialer Richtung als auch auf der Stirnfläche geschieht.

## Ansprüche

Unterteiltes Führungsrohr für einen Seilzug bzw. für einen Schlauch mit in dem Schlauch geführten Seil, das aus mehreren Einzelrohren derart zusammengesetzt ist, daß an den Verbindungsstellen das Ende eines ersten Einzelrohres in das sacklochartig aufgeweitete Ende eines zweiten Einzelrohres gesteckt ist, dadurch gekennzeichnet, daß das eingesteckte Ende (1a) des ersten Einzelrohres (1) mit einem Gummipuffer (8) umkleidet ist, der auch die Stirnfläche des Rohres (1) umgreift.

| | EINSCHLÄGIGE DOKUMENTE | | EP 89111445.6 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | <u>US - A - 4 238 974</u><br>(FAWCETT)<br>  * Gesamt *<br>  -- | 1 | F 16 C 1/10 |
| Y | <u>DE - C2 - 3 023 619</u><br>(WOCO FRANZ-JOSEF & CO)<br>  * Fig. *<br>  -- | 1 | |
| A | PATENT ABSTRACTS OF JAPAN,<br>unexamined applications,<br>Sektion M, Band 9, Nr. 231,<br>18. September 1985<br>THE PATENT OFFICE JAPANESE<br>GOVERNMENT<br>Seite 76 M 414<br>  * Kokai-Nr. 60-88 213<br>    (NIPPON CABLE SYSTEM K.K.) *<br>    ---- | | |

RECHERCHIERTE
SACHGEBIETE (Int. Cl.4)

F 16 C  1/00
F 16 L 21/00
F 16 L 55/00
F 16 B  7/00

Der vorliegende Recherchenbericht wurde für alle Patentansprüche erstellt.

| Recherchenort | Abschlußdatum der Recherche | Prüfer |
|---|---|---|
| WIEN | 31-08-1989 | ROUSSARIAN |